(19) Europäisches Patentamt / European Patent Office / Office européen des brevets

(11) **EP 3 965 185 A1**

(12) **EUROPEAN PATENT APPLICATION**

(43) Date of publication:
**09.03.2022 Bulletin 2022/10**

(21) Application number: **20194092.1**

(22) Date of filing: **02.09.2020**

(51) International Patent Classification (IPC):
**H01M 4/134** (2010.01)   **H01M 4/1395** (2010.01)
**H01M 4/36** (2006.01)   **H01M 4/38** (2006.01)

(52) Cooperative Patent Classification (CPC):
**H01M 4/134; H01M 4/1395; H01M 4/362;
H01M 4/366; H01M 4/386**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Evonik Operations GmbH
45128 Essen (DE)**

(72) Inventors:
- **LYUBINA, Julia
  01097 Dresden (DE)**
- **BADE, Stefan
  68220 Michelbach Le Haut (FR)**
- **WIGGERS, Hartmut
  48734 Reken (DE)**
- **ORTHNER, Hans
  47058 Duisburg (DE)**

(74) Representative: **Evonik Patent Association
c/o Evonik Industries AG
IP Management
Bau 1042A/PB 15
Paul-Baumann-Straße 1
45772 Marl (DE)**

(54) **HIGH PERFORMANCE SILICON-BASED MATERIALS FOR LITHIUM ION BATTERY ANODES**

(57) Object of the invention are amorphous silicon carbon composite particles comprising as components of the particles 85 to 99,63 wt.-% silicon content, 0.3 to 15 wt.-% carbon content, and at least 0.07 wt.-% hydrogen content, wherein the components sum up to 100 wt.-%, and wherein the carbon content in the area beneath the surface of the particles starting with the surface and reaching up to at least 30 nm from the surface in direction to the centre of the particles is at least 3 wt.-% higher than in the area of the centre of the particles, wherein the area of the centre is the remaining part of the particles and is directly joined to the area beneath the surface.

Fig. 4a

**Description**

Object of the invention are amorphous silicon carbon composite particles comprising the components silicon, carbon and hydrogen, wherein the silicon and carbon content gradually changes from the centre of the particles to the surface, and wherein the silicon content rises from the surface to the centre of the amorphous particles and the carbon content diminishes from the surface to the centre.

The use of silicon-based materials can increase the energy density of lithium ion batteries by at least 20 % compared to the conventional graphite-based anodes. However, silicon-containing anodes are susceptible to rapid degradation due to severe volume changes on lithiation/delithiation reaction during cycling. This challenge triggers the development of silicon-based materials with a different structure to minimize this degradation during lithiation/delithiation in silicon-based anodes and to pursue higher capacities and longer cycle life of batteries, in particular, of lithium ion batteries (LIB).

Therefore, active electrode materials of anodes and cathodes play a crucial role in maximizing the total specific energy of the cell, $E_{cell}$, given by

$$E_{cell} = C_{cell} U_{cell}, \qquad (1)$$

where $C_{cell}$ is the total cell capacity and $U_{cell}$ is the nominal voltage of the cell. The total cell capacity can be calculated as

$$C_{cell} = \frac{1}{\frac{1}{C_c}+\frac{1}{C_a}+\frac{1}{Q_m}}, \qquad (2)$$

with $C_c$ and $C_a$ being the specific capacity of the cathode (also called positive electrode, i.e. electrode operating at a higher electrode potential) and anode (electrode operating at a lower potential), respectively, and $\frac{1}{Q_m}$ being the specific mass of inactive battery components (electrolyte, separator, additives, current collector, casing etc.) in g/Ah. Thus, in order to maximise the energy stored in a cell it is necessary to maximise the *reversible* specific capacity and the difference between operating potentials of the cathode and anode (usually achieved by selecting a cathode with a high potential). High capacity, high rates capacity electrodes and high potential cathodes allow the production of smaller LIBs.

The state-of-the-art anode material used in LIB is graphite with rather low specific capacity of about 370 mAh/g. On the other hand, lithium is known to form alloys with a number of elements including silicon. Useful are compounds that are stable at room temperature, have the highest specific and volumetric capacity, adequate operating potential (i.e. anode material potential must be low enough to maintain a large potential difference between the cathode and anode, but above the potential of the metallic lithium to minimise Li plating during rapid charge) and are preferably non-toxic and abundant.

While lithium metal has intrinsically the lowest potential versus Li/Li+ and the highest specific capacity of 3862 mAh/g, in liquid organic electrolytes, lithium is not coated homogeneously, but forms Li deposits with a high surface area (e.g. dendrites) posing high safety risks. Among the known alloying elements silicon has the highest specific capacity: full lithiation of silicon near room temperature results in the formation of the $Li_{15}Si_4$ phase corresponding to the specific capacity of about 3600 mAh/g.

A serious problem of the combination of silicon as an anode material and lithium is the extremely large volume expansion of about 300 % (for comparison, graphite expansion on lithiation is limited to about 10 %).

The volume expansion/contraction during lithiation/delithiation leads to fracture of the (coarse) particles and subsequent decrepitation of the electrode, loss of electric contact between the particles and current collector and repeated disruption of the so-called solid electrolyte interphase (SEI), i.e. a passivation layer formed as a result of the electrolyte decomposition on the particle surface, which continuously consumes the electrolyte and leads to a continuous lithium loss. All of them force a rapid capacity fade and cell failure. The fracture of silicon hinders the use of bulk silicon and coarse silicon powders as anode material in LIB.

This behavior can be explained by strongly inhomogeneous stresses arising as a result of a solid-state amorphization that occurs on the first lithiation of the crystalline silicon (c-Si) materials, when an amorphous lithiated $Li_xSi$ shell (a-$Li_xSi$, with x close to 3.4) moves from the surface towards the non-lithiated crystalline Si core and results in crack initiation at the particle surface. Whereas in the amorphous silicon (a-Si) the lithiation also proceeds by the movement of a sharp phase boundary between the unlithiated a-Si and amorphous a-$Li_xSi$ phase (x ≈ 2.5 - 3.75), in contrast to c-Si the hydrostatic stress in a-Si is of lower magnitude and, thus, a higher stability can be expected in the amorphous silicon materials.

The capacity fade in Si-based electrodes is connected to the formation of the crystalline c-$Li_{15}Si_4$ phase. Avoiding the formation of c-$Li_{15}Si_4$ allows more stable cycling.

The suppression of the c-$Li_{15}Si_4$ formation was realised in particles comprising an active Si phase and an inactive matrix phase, such as found in Si-transition metal or Si-$SiO_x$ ($x \leq 2$) alloys [D.S.M. Iaboni and M.N. Obrovac, J. Electrochem. Soc. 163 (2016) A255]. However, the inactive phase reduces the specific capacity of the material greatly or/and can irreversibly trap Li during the first cycle, i.e. significantly reduce first cycle Coulombic efficiency (CE), and is, therefore, disadvantageous.

Object of the invention was therefore the design of a silicon-based material with minimized degradation during lithiation/delithiation, furnishing a higher capacity for batteries with a longer cycle life. Therefore, another object of the invention was the design of a material supressing the formation of detrimental crystalline $Li_{15}Si_4$ phase, in particular for a certain time during their use in batteries. A further object was providing a silicon-based material with a high specific capacity in the first cycle and the following cycles. A further object was to provide a silicon-based material with a high first cycle Coulombic efficiency. A further object was to provide a silicon-based material which allows a higher silicon content in matrix materials of anodes, such as in graphite anodes, in particular, without compromising their cyclability. In addition, the silicon-based material shall be producible in a large scale and cost-efficient process.

It is believed that the silicon carbon particles of the invention comprise silicon alloyed with carbon, in particular the carbon content of the particles is usually in a range to enable the formation of amorphous silicon phase alloyed with carbon, in particular the carbon is at least partially distributed on the atomic scale or as small domains of carbon atoms in amorphous silicon. It is believed that the silicon carbon particles of the invention exist with an inclusion of atomically distributed carbon in amorphous silicon, in particular in the silicon carbon composite.

In addition, a certain carbon content may not be present as an alloy with silicon. Further, due to the condition of synthesis a certain content of hydrogen, in particular at the surface of the silicon carbon particles, is present. The silicon carbon composite particles of the invention have beneficial effects on the performance of the particles in battery applications, combining the conductivity and cyclability of the carbon with the high capacity of the silicon.

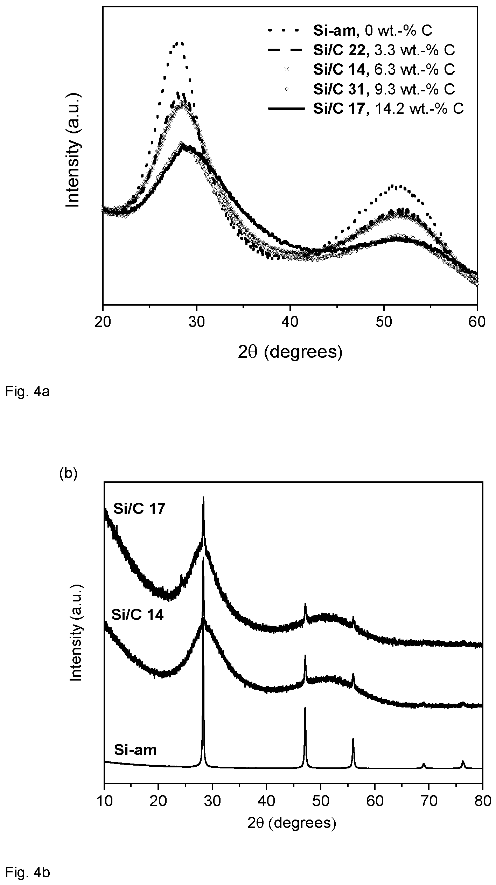

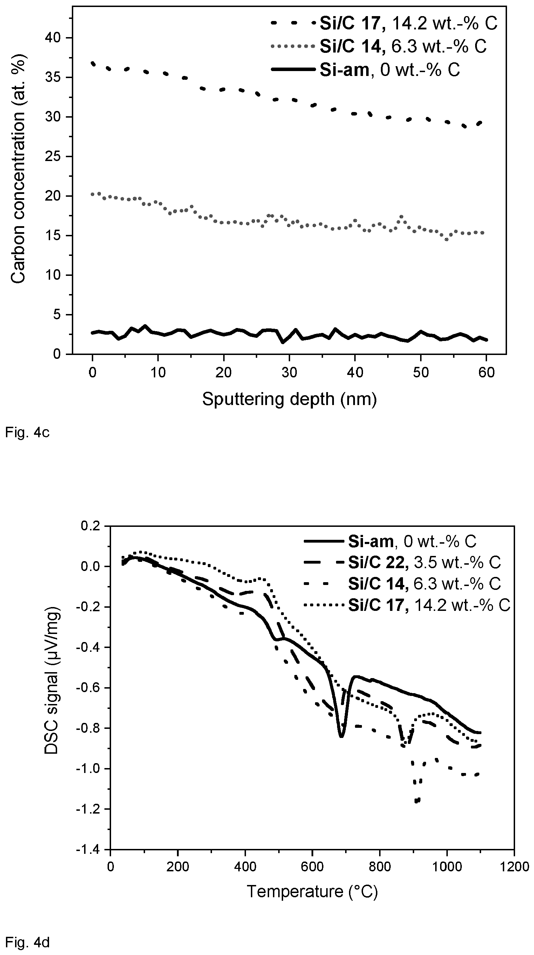

The specific carbon content of the amorphous silicon carbon composite particles of the invention stabilizes the amorphous phase and inhibits the formation of a crystalline phase for a certain time at elevated temperature. Further, it was recognized that a higher carbon content of the silicon carbon composite particles allows an increased suppression of the crystalline phase formation at elevated temperature. For example, in the amorphous silicon (pure amorphous silicon, Si-am) annealing at 690 °C results in the complete transformation to the crystalline phase of silicon within one hour, whereas the amorphous silicon carbon composite particles resist crystallization at least three to four times longer, depending on the carbon content of the particles. The particles of the invention undergo only a partial phase transformation from the amorphous state into the crystalline state by 20 wt.-% with a carbon content of 14.2 wt.-% compared to 40 wt.-% of crystalline phase observed in particles comprising 6.3 wt.-% carbon. The degree of the crystallization can thus be correlated to the carbon content (s. fig. 4b). It is believed that the silicon alloyed with carbon and/or in combination with the carbon content of silicon carbon particles suppress the formation of crystalline $Li_{15}Si_4$ from the amorphous $Li_xSi$, x = 2.5 to 3.75, in particular from the amorphous $Li_{15}Si_4$ phase.

The reason for this behaviour may be the altered atomic environment in the amorphous silicon carbon composite particles. The addition of carbon may disturb the local atomic environment in the amorphous phase and thus supress the transformation to the crystalline c-$Li_{15}Si_4$ modification.

For the amorphous silicon carbon composite particles, in particular comprising carbon distributed at atomic scale or in domains of carbon atoms in amorphous silicon, it was observed that the stability of the particles increases with increasing carbon content.

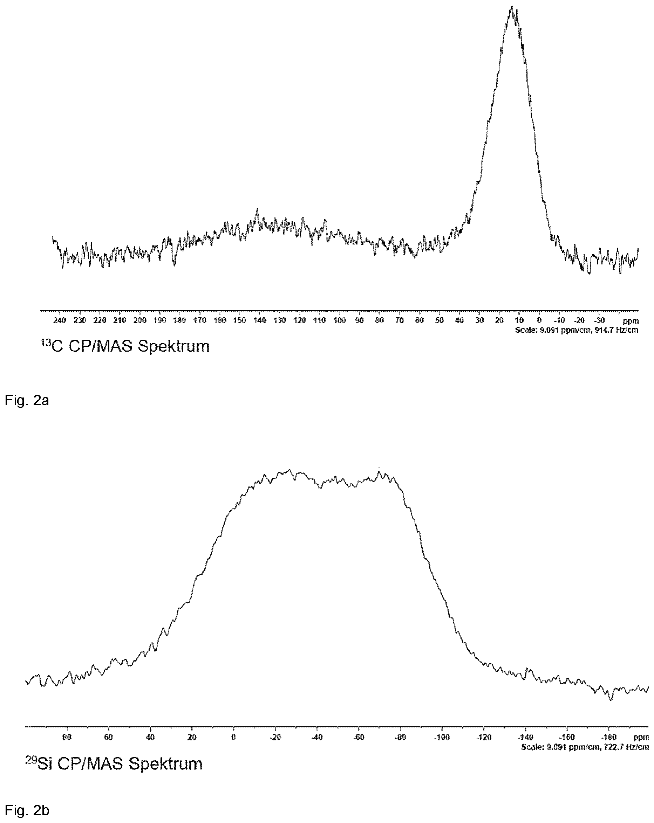

It is further preferred, that the silicon carbon composite particles have no detectable aromatic bonding. The observed broad signal in CPMAS (fig. 2a: $^{13}$C-CP/MAS) being purely due to the instrument background. The content of hydrogen, carbon or oxygen is always described in wt.-% or as at.-%.

A particular advantage of the process of the invention is a one-step synthesis, suitable for scale-up. Further, inhomogeneities during synthesis resulting from mixing peculiarities do not play a role in the process of the invention.

Object of the invention are silicon carbon composite particles comprising the components 85 to 99.63 wt.-% silicon content,

0.3 to 15 wt.-% carbon content, in particular atomically distributed carbon in amorphous silicon, and at least 0.04 wt.-% hydrogen content, preferably at least 0.05 wt.-% hydrogen content and optionally 0 to 1 wt.-% oxygen content, wherein the components sum up to 100 wt.-%, and wherein the carbon content in the area beneath the surface of the particles starting with the surface, in particular at 0 nm, and reaching up to at least 30 nm from the surface in direction to the centre of the particles is at least 3 wt.-% higher than in the area of the centre of the particles, wherein the area of the centre is the remaining part of the particles and is directly joined to the area beneath the surface.

According to a preferred aspect of the invention the carbon content in the area beneath the surface of the particles starting with the surface, in particular at 0 nm, and reaching up to at least 30 nm from the surface in direction to the centre of the particles is from 5 wt.-% to 15 wt.-%, preferred are 6 wt.-% to 13 wt.-%, in relation to the remaining components that sum up to 100 wt.-% in the area beneath the surface of the particles.

According to a preferred aspect of the invention the proportion of the carbon content in relation to the silicon content as weight ratio in the area beneath the surface of the particles starting with the surface, in particular at 0 nm, and reaching up to at least 30 nm from the surface in direction to the centre of the particles is from 1 : 1 to 1 : 11, in particular from

1 : 5 to 1 : 11, preferred from 1 : 5 to 2 : 21. And optionally the proportion of the carbon content in relation to the silicon content in the area of the centre of the particles, is from

1 : 8 to 1 : 20, preferred from 1 : 11 to 1 : 20, wherein the area of the centre is the remaining part of the particles and is directly joined to the area beneath the surface

In addition, the silicon to carbon proportion in the silicon carbon composite particles $(Si/C)_{total}$ is greater than 5, preferred greater than 5,6.

In addition, optionally, the specific surface of the particles is from 3 to 35 $m^2/g$, particularly from 3 to 12 $m^2/g$, preferred from 4 to 9 $m^2/g$.

In a most preferred embodiment of the invention the average particle size of the primary particles is less than 300 nm, in particularly less than 250 nm. The primary particles may be agglomerated and/or aggregated, preferably the primary particles are agglomerated but not sintered, wherein the size of the agglomerates is from 150 to 1500 nm, in particular from 250 to 700 nm. Preferably about 10 to 90%, in particular 80 to 90 % of the particles are not sintered.

The position of the surface of the particles is located at zero nm (0 nm). It is preferred that the particles comprise atomically distributed carbon in amorphous silicon, wherein the atomically distributed carbon decreases from the surface of the particles to the centre of the particles.

Particularly preferred are silicon carbon composite particles comprising: 85 to 97 wt.-% silicon content, 1.05 to 15 wt.-% carbon content, and at least 0.05 wt.-% to 5 wt.-% hydrogen content and optionally 0 to 1 wt.-% oxygen content, wherein the components sum up to 100 wt.-% optionally, wherein the specific surface of the particles is from 3 to 35 $m^2/g$, particularly from 3 to 10 $m^2/g$, preferred from 4 to 9 $m^2/g$.

Also preferred are silicon carbon composite particles comprising: 85 to 95 wt.-% silicon content, 1.03 to 15 wt.-% carbon content, and at least 0.07 wt.-% to 5 wt.-% hydrogen content and optionally 0 to 1 wt.-% oxygen content, wherein the components sum up to 100 wt.-% optionally, wherein the specific surface of the particles is from 3 to 35 $m^2/g$, particularly from 3 to 10 $m^2/g$, preferred from 4 to 9 $m^2/g$.

According to a further object of the invention also preferred are silicon carbon composite particles comprising: 85 to 92.93 wt.-% silicon content, 7 to 15 wt.-% carbon content, and at least 0.07 wt.-% to 5 wt.-% hydrogen content and optionally 0 to 1 wt.-% oxygen content, wherein the components sum up to 100 wt.-%, wherein the particles are particularly preferred from 98 % to 100 % amorphous particles, and optionally, wherein the specific surface of the particles is from 3 to 35 $m^2/g$, particularly from 3 to 10 $m^2/g$, preferred from 4 to 9 $m^2/g$.

More preferred are silicon carbon composite particles comprising 85 to 97 wt.-% silicon content, 2.5 to 15 wt.-% carbon content, and at least 0.1 wt.-% to 5 wt.-% hydrogen content and optionally 0 to 1 wt.-% oxygen content, wherein the components sum up to 100 wt.-%, optionally, wherein the specific surface of the particles is from 3 to 35 $m^2/g$, particularly 3 to 10 $m^2/g$, preferred from 4 to 9 $m^2/g$.

According to a particularly preferred further object of the invention also preferred are silicon carbon composite particles comprising: 93.5 to 92.93 wt.-% silicon content, 0.7 to 1.5 wt.-%, preferred 1.0 to 1.5 wt.-% carbon content, and at least 0.07 wt.-% to 5 wt.-% hydrogen content and optionally 0 to 1 wt.-% oxygen content, wherein the components sum up to 100 wt.-%, wherein the particles are particularly preferred from 98 % to 100 % amorphous particles, and optionally, wherein the specific surface of the particles is from 3 to 35 $m^2/g$, particularly from 3 to 10 $m^2/g$, preferred from 4 to 9 $m^2/g$.

Per definition in particular the centres of the particles are located at half-width of a diameter of each particle, preferred of spherically particles, wherein the carbon content decreases from the surface to the centre gradually. The same applies for non-spherical particles, for which at least two diameters are selected to locate the centre.

It is particularly preferred that the silicon carbon composite particles possess an amorphous content of more than 90 %, in particular of more than 98 %, more preferred up to 100 %. In this regard it is preferred that the silicon carbon composite particles are amorphous from 95 % or 97 % up to 100 %. Particularly preferred the silicon carbon composite particles are amorphous from 98 % up to 100 %, most preferred from 99 % up to 100 %. The amorphous content is measured with x-ray powder diffraction (XRPD).

Preferred atomic concentrations in at.-% in the following three parts of the particles are

- beneath the surface of the particles, starting with the surface, in particular at 0 nm, and reaching up to at least 30 nm from the surface in direction to the centre,

- the area of the centre of the particles, wherein the area of the centre is the remaining part of the particles and is directly joined to the area beneath the surface, wherein the area of the centre comprises a core area of 60 nm in diameter in the centre of the particle and a surrounding area between the core area and the surface area, wherein the silicon to carbon concentration in at.-% in the core area is from 51/31 to 71/15, in particular from 52/27 to 69/16, and in the surrounding area the silicon to carbon concentration is in at.-% from 46/36 to 69.8/17, in particular from 50.6/32.4 to 64.4/19.6. It is particularly preferred that the core area of the particles comprises atomically distributed carbon in amorphous silicon.

In a preferred embodiment of the invention the silicon carbon composite particles are free from a chlorine content, in particular the chlorine content is below 0.7 ppm-wt, preferred below 0.4 ppm-wt., more preferred from 0.01 ppb.-wt. to 0.4 ppm-wt.

According to one aspect of the invention the silicon carbon composite particles possess an average particle size of the primary particle of less than 300 nm, in particularly less than 250 nm. Typically, the carbon silicon composite particles have a primary particle size from 30 nm to 250 nm, preferred from 80 nm to 150 nm. Optionally the particles may form agglomerates, wherein the size of agglomerates of the primary particles is preferred to be less than 1500 nm, wherein the particles are obtainable or formed in a) a gaseous stream comprising precursor silane, and b) a gaseous stream comprising precursor olefinic hydrocarbon, at a reaction temperature in the range of 400 °C to 700 °C, in particular 400 °C to 670 °C, preferred 490 to 640 °C, within a time frame of 500 milliseconds to 20 seconds, optionally they are formed within a tubular inert gas stream, particularly the silicon carbon particles are obtained within a reaction zone that is located within the tubular inert gas stream, and optionally the tubular inert gas stream possesses a temperature of 400 to 670 °C, preferred 430 to 650 °C, and optionally the reaction mixture is quenched with an inert gas possessing a lower temperature than the reaction mixture, and the silicon carbon composite particles are collected. According to a further aspect of the invention preferably the particles do not form aggregates, i.e. the particles are not sintered to aggregates due to their formation.

A further aspect of the invention is that the particles may have a content of silicon, in particular amorphous silicon, comprising hydrogen, SiH-species and/or (poly-[$SiH_2$]-), and optionally wherein the hydrogen content in the particles is at least 0.05 wt.-%, and wherein the components sum up to 100 wt.-%, in particular the hydrogen content is at least
0.1 wt.-%, preferably 0.3 wt.-%, particularly preferred at least 0.5 wt.-% in the particles.

According to a further aspect of the invention the swelling of the volume of the particles induced by lithiation is less than 250 %, preferred less than 300 %, in particular at a specific capacity of at least 3000 mAh/g, preferred less than 230 %, compared to particles without lithiation.

It is preferred that the particles are spherical particles, wherein the ratio of a first diameter in relation to a second diameter of at least 10 wt.-% of the particles is 0.9 to 1.1, wherein the first and second diameter are arranged perpendicular to each other.

The surface area of the particles in a powder is preferred to be in the range from 3 to
35 $m^2$/g, particularly from 3 to 15 $m^2$/g, in particular from 5 to 9 $m^2$/g, preferred are 6 to 8 $m^2$/g.

According to a further aspect of the invention the content of metals apart from silicon in the silicon carbon particles is preferred to be less than 10 ppm-wt., in particular less than
7 ppm-wt., wherein the metals may be selected from Al, Ca, Fe, Co, Zn, Na, Mg, K, most preferred the content of metals in the silicon carbon composite particles is less than
7 ppm-wt. In addition, the content of halogens may be less than 0.7 ppm-wt, preferred below 0.4 ppm-wt., more preferred from 0.01 ppb.-wt. to 0.4 ppm-wt.

According to a further aspect of the invention it is preferred that the reactivity with electrolyte defined as a ratio of the lithiation capacity at cycle (x) to delithiation capacity at cycle (x-1) is less than 1.02, wherein per definition the reactivity with electrolyte is as a rule above 1 meaning that a reaction with electrolyte takes place; the closer this value to 1 the lower the reactivity with electrolyte.

Further, silicon carbon composite particles are preferred, wherein the silicon content of the particles increases gradually from the area beneath the surface of the particles, wherein the area beneath the surface of the particles starts with the surface, in particular at 0 nm, and reaches up to 30 nm from the surface in direction to the centre of the particles, and wherein the area of the centre is joined to the area beneath the surface, and wherein the carbon content decreases gradually from the surface of the particles to the centre of the particles by at least 3 wt.-%, in particular at least by 4 wt.-% to 20 wt.-%, in correlation to the particular total carbon content of the particles, in particular the carbon is atomically distributed carbon in amorphous silicon, in particular the centre of the particles is located at half-width of a diameter of the particles, wherein the carbon content decreases. In particular the area beneath the surface of the particles comprises the surface of the particles from 0 nm to 30 nm distance in direction of a diameter of the particles.

In addition, it is preferred that the silicon content of the particles is at least 0.5 wt.-% to 30 wt.-%, preferred from 2.5 wt.-% to 20 wt.-%, more preferred from 4 to 10 wt.-%, higher in the area of the centre of the particles than in the area beneath the surface of the particles, and, wherein the area of the centre is joined to the area beneath the surface, wherein the area beneath the surface of the particles starts with the surface, in particular at 0 nm, and reaches up to 30 nm from the surface in direction to the centre of the particles.

A particularly preferred embodiment of the invention comprises particles, wherein the silicon content of the particles is at least 0.5 wt.-% and optionally to 30 wt.-%, preferred from at least 0,7 wt.-%, more preferred 1.5 wt.-% to 20 wt.-%, more preferred from 2.0 wt.-% to

15 wt.-%, higher in the area of the centre of the particles, in particular the silicon content is at least 2.5 wt.-% to 10 wt.-%, in particular 2.5 wt.-% to 5 wt.-%, higher in the area of the centre of the particles, than in the area beneath the surface of the particles, and wherein the area of the centre is joined to the area beneath the surface, wherein the area beneath the surface of the particles starts with the surface, in particular at 0 nm, and reaches up to 30 nm from the surface in direction to the centre of the particles.

In particular, in all events the area beneath the surface of the particles comprises the surface of the particles from 0 nm to 30 nm distance in direction of a diameter of the particles.

According to a further preferred aspect of the invention the carbon content of the particles is from at least 3 wt.-% to optionally 30 wt.-%, in particular from 4 wt.-% to

20 wt.-% higher in the area beneath the surface than in the in the area of the centre of the particles, wherein the area of the centre is joined to the area beneath the surface, wherein the area beneath the surface of the particles starts with the surface, in particular at 0 nm, and reaches up to 30 nm from the surface in direction to the centre of the particles. It is particularly preferred that the silicon content increases reciprocally to the decreasing carbon content.

According to a further preferred aspect of the invention it is preferred that the carbon content of the particles, here total carbon content of the particles, is at least from 1 wt.-% to

15 wt.-%, preferred 2 wt.-% to 14 wt.-%, in particular 2 wt.-% to 10 wt.-% or 2 wt.-% to 8 wt.-%, particular preferred from 3 wt.-% to 6 wt.-%, wherein the components of the particles sum up to 100 wt.-%. According to a further object the carbon content is preferred from 6 to 14 wt.-%, wherein the remaining components sum up to 100 wt.-%. According to another preferred object the carbon content is preferred from 0.7 to 1.5 wt.-%, wherein the remaining components sum up to 100 wt.-%.

Further, the particles may contain a content of aliphatic carbon-hydrogen compounds, in particular wherein the content of aliphatic-carbon hydrogen compounds is from 0.05 wt.-% to 5 wt.-%, in particular 0.05 wt.-% to 3 wt.-%, and optionally the carbon content is comprised in the carbon content of the particles. Preferably the aliphatic-carbon hydrogen compounds comprise alkyl and/or alkenyl groups.

Silicon carbon composite particles according to the invention preferably have a density from 1.8 to. 2.25 g/cm3, particularly ca. 2 g/cm$^3$ (density of crystalline Si is about 2.3 g/cm$^3$).

According to a further aspect of the invention the particles or an anode comprising the particles of the invention particularly exhibit capacity (mAh/g) versus potential versus Li/Li$^+$ (Volt) curves, wherein the curves of the particles possess no plateau extending from 750 mAh/g to 2000 mAh/g between 0.4 Volt and 0.5 Volt due to formation of crystalline Li$_{15}$Si$_4$ (c-Li$_{15}$Si$_4$) during at least the first cycle, and in particular until at least the twentieth cycle, more preferred during at least 100 cycles, in particular during the first cycle of lithiation in a secondary cell. According to a further aspect of the invention the particles or an anode comprising the particles preferably possess a delithiation capacity (mAh/g) of at least 2500 mAh/g at 0.6 Volt, in particular of at least 2900 mAh/g at 0.8 Volt in the first cycle, in particular first cycle of lithiation in a secondary cell, measured as capacity (mAh/g) versus potential versus Li/Li+ (Volt) curves.

According to a further aspect of the invention the swelling of an anode comprising the particles induced by lithiation is less than 180 % at a specific capacity of at least 3000 mAh/g, in particular less than 170 % compared to the anode without lithiation. In particular the swelling of an anode comprising the particles in a single layer laminate full cell configuration with NMC111 cathode is less than 180 % at a specific capacity of at least 3000 mAh/g, in particular less than 170 % compared to the anode without lithiation.

According to a further aspect of the invention the particles or an anode comprising the particles preferably have particles possessing differential capacity (dQ/dV) versus voltage curves with a peak corresponding to the crystalline Li$_{15}$Si$_4$ (c-Li$_{15}$Si$_4$) formation, whereby the ratio of the area of this peak to the area of the differential capacity (dQ/dV) in the range between 0.38 and 0.8 V is in the range of 0 to 0.1 during at least first cycle, and in particular until at least the twentieth cycle, more preferred during at least 100 cycles.

According to a further aspect of the invention the particles or an anode comprising the particles have at the first cycle a Coulombic efficiency of at least 89 % in the silicon carbon composite particles (synonym to Si/C powders of this invention).

Object of the invention is also a process for the production of silicon carbon composite particles, and in particular the particles obtainable according to the process, comprising the steps of

(i) reacting

a) a gaseous stream comprising precursor silane of at least one precursor silane, wherein the precursor silane comprises monosilane, disilane, trisilane, tetrasilane, pentasilane, hexasilane, heptasilane, octasilane, iso-terasilane, iso-pentasilane, neo-pentasilane, cyclopentasilane, cyclohexasilane and/or a fully hydrogenated organosilane comprising 1 to 8 silicon atoms and 1 to 10 carbon atoms or a mixture of at least two of the aforementioned silanes, and

b) a gaseous stream comprising precursor hydrocarbon selected from olefinic hydrocarbons and alkines or a mixture of at least two of the aforementioned hydrocarbons, particular preferred is a gaseous stream comprising precursor olefinic hydrocarbon of at least one precursor olefinic hydrocarbon selected form alkenes and cycloalkenes comprising 1 to 10 carbon atoms or a mixture of at least two of the aforementioned olefinic hydrocarbons,

(ii) within a tubular reactor at a reaction temperature of 400 °C to 700 °C, preferred at 490 °C to 670 °C, more preferred 490 °C to 645 °C,
(iii) wherein the reaction mainly takes place within a heated tubular inert gas stream during a time frame of 500 milliseconds and 20 seconds, preferably 500 milliseconds to 15 seconds, and optionally
(iv) the reaction mixture is quenched with an inert gas possessing a lower temperature than the reaction mixture, and optionally collecting the silicon carbon composite particles.

Particularly the olefinic hydrocarbons and alkines may be selected from linear, branched and/or cyclic olefinic hydrocarbons and alkines, such as alkenes, cyclo-alkenes, alkines and cyclo-alkines. In general, the hydrocarbons may comprise hydrocarbon with 1 to 100 C-atoms, preferred are 1 to 20 C-atoms.

Optionally gaseous by-products are collected, too.

It is preferred that the reaction takes place in (ii) within a tubular reactor at a reaction temperature of 400 °C to 700 °C, preferred at 490 °C to 670 °C, particular preferred at 490 °C to 645 °C, most preferred are 490 °C to 610 °C, (iii) wherein the reaction mainly takes place within a heated tubular inert gas stream during a time frame of 500 milliseconds and 20 seconds, preferred are 500 milliseconds to 15 seconds, wherein the reaction takes place at 0.8 to 5 $bar_{abs}$, in particular at 1 to 3 $bar_{abs}$., preferred at 1.2 to 3.0 $bar_{abs}$.

The reaction temperature is defined as the temperature of the reaction, in particular of the reaction zone, within the heated tubular inert gas stream, in particularly within a time frame of 500 milliseconds to 20 seconds.

According to a particularly preferred process (iii) the reaction takes place within a reaction zone that is located within the heated tubular inert gas stream during a time frame of 500 milliseconds to 20 seconds, and wherein the heated tubular inert gas stream possesses an outer circumference and an inner circumference, wherein the inner circumference is joined with the reaction zone which is within the heated tubular inert gas stream, wherein the radial distance from the inner circumference to the outer circumference of the tubular inert gas stream has a ratio of 2 : 1 to 1 : 10 in relation to the radius of the reaction zone within the tubular inert gas stream, preferred is 1 : 1 to 1 : 5. The radius of the reaction zone may vary over the reaction time, in particular the radius may increase after the injection of the precursor gas streams or a mixture of the precursor streams. In addition it is most preferred that in (iii) the reaction takes place within a reaction zone that is located within the heated tubular inert gas stream during a time frame of 500 milliseconds to 20 seconds, and wherein the heated tubular inert gas stream possesses a temperature of about 400 to 520 °C when the precursor silane, the precursor hydrocarbon, in particularly the precursor olefinic hydrocarbon, or a mixture thereof is injected into the reaction zone of the tubular reactor. The injection of the precursors direct into the centre of the tubular inert gas stream leading to a confinement of the reaction in the center of the reaction tube. Due to the very specific reaction conditions, forming a reaction zone comprising at least two reaction sections within the tubular inert gas stream, wherein the first reaction section comprises the injection of the gaseous precursor stream comprising precursor silane and precursor hydrocarbon, in particularly the precursor olefinic hydrocarbon, being injected axially into the reaction zone that has a temperature from 400 °C to 520 °C, preferred from 430 °C to below 490 °C. Wherein the reaction zone comprises at least two reaction sections along the axis of the tubular reactor, wherein the second reaction section follows behind the first reaction section. The second reaction section having a reaction temperature from 490 °C to 700 °C, in particular from 490 to 650 °C. The carbon source will not be consumed by 100 % in the reaction.

The heated tubular inert gas stream possesses in particular a concentric outer circumference and a concentric inner circumference, wherein the inner circumference is joined with the reaction zone which is within the heated tubular inert gas stream, wherein the concentric radial distance from the inner circumference to the outer circumference of the tubular inert gas stream has a ratio of 2 : 1 to 1 : 10. Concentric means having a common centre at the length axis of the tubular reactor.

It is further preferred that a) a gaseous stream comprising precursor silane of at least one precursor silane, and b) a gaseous stream comprising precursor hydrocarbon, in particularly olefinic hydrocarbon, are injected into the tubular reactor at a volume flow of 1 to 15 $Nm^3$/h, in particular at a volume flow of 1 to 5 $Nm^3$/h, preferably at a volume

**EP 3 965 185 A1**

flow of 1.1 to 5 Nm$^3$/h. According to a particular preferred embodiment, the precursor silane, the precursor hydrocarbon, in particularly olefinic hydrocarbon, or a mixture thereof is injected into the tubular reactor at a volume flow of 1 to 15 Nm$^3$/h, in particular 1 to 10 Nm$^3$/h, preferably from 1 to 5 Nm$^3$/h. a) and b) can be mixed before they are injected into the reactor.

According to a further aspect a) a gaseous stream comprising precursor silane of at least one precursor silane, and b) a gaseous stream comprising precursor hydrocarbon, in particularly olefinic hydrocarbon, are injected into the tubular reactor at a volume flow of 1 to 15 Nm$^3$/h, in particular at a volume flow of 1 to 5 Nm$^3$/h, preferably at a volume flow of 1.1 to 5 Nm$^3$/h, wherein the proportion of a) to b) is from 20 : 1 to 1: 1, preferred from 10 : 1 to 1 : 1, optionally the reaction takes place at 1.2 to 3.0 bar$_{abs}$.

Further, it is preferred that the reaction mainly takes place within a heated tubular inert gas stream comprising Argon, Helium and/or Neon, in particular Argon, during a time frame of 500 milliseconds and 15 seconds.

According to a further aspect of the invention the inert gas is selected from Argon, Helium, Neon and Nitrogen, in particular the inert gas stream is selected from Argon and/or the inert gas for quenching is selected from Nitrogen and Argon.

It is further preferred that the inert gas stream has a volume flow of 0.5 to 25 Nm$^3$/h, in particular from 1 to 10 Nm$^3$/h, in particular 2 to 8 Nm$^3$/h, a preferred inert gas is Argon.

It is further preferred that the heated tubular inert gas stream has a volume flow of 0.5 to 25 Nm$^3$/h, in particular from 1 to 10 Nm$^3$/h, in particular 2 to 8 Nm$^3$/h and, wherein the temperature of the inert gas stream is 490 °C to 670 °C. A preferred inert gas is Argon.

According to a particular preferred embodiment, the precursor silane, the precursor olefinic hydrocarbon or a mixture thereof is injected into the tubular reactor at a lower volume flow, in particular with a volume flow of 1 to 5 Nm$^3$/h, than the heated tubular inert gas stream, in particular with a volume flow of 3 to 15 Nm$^3$/h, particularly wherein the heated tubular inert gas stream possesses a temperature of about 400 to 520 °C when the precursor silane, the precursor olefinic hydrocarbon or a mixture thereof being injected into the reaction zone of the tubular reactor.

According to a particular preferred embodiment, the precursor silane, the precursor olefinic hydrocarbon or a mixture thereof is injected into the tubular reactor at a lower volume flow, in particular with a volume flow of 1 to 4 Nm$^3$/h, than the heated tubular inert gas stream, particularly wherein the tubular inert gas stream has a volume flow of more than 4 to 10 Nm$^3$/h.

According to an further aspect, the reaction may take place in the presence of hydrogen, in particular the gaseous stream comprising precursor silane may contain in addition hydrogen, more preferred hydrogen (H$_2$) at a volume flow of 0.2 to 15 Nm$^3$/h, and/or b) the gaseous stream comprising precursor olefinic hydrocarbon may in addition contain hydrogen (H$_2$), more preferred hydrogen at a volume flow of 0.2 to 15 Nm$^3$/h, and/or the heated tubular inert gas stream may in addition contain hydrogen, more preferred hydrogen (H$_2$) at a volume flow of 0.2 to 15 Nm$^3$/h. It may be preferred that hydrogen is injected, preferred into the tubular reactor, at a volume flow of 0.2 to 15 Nm$^3$/h optionally as a mixture with at least one or both precursors and/or as a mixture with the inert gas.

Object of the invention is also an anode, in particular anode for use in a cell in a secondary lithium ion battery (LIB) comprising silicon carbon composite particles, wherein the anode optionally comprising at least a binder and optionally comprising acetylene black, carbon black, graphite or a mixture of these components. A preferred composition of an anode may comprise 2 to 90 wt.-%, in particular 40 to 65 wt.-%, of silicon and/or silicon carbon composite particles, preferred are silicon carbon composite particles, 5 to 97 wt.-%, 5 to 30 wt.-%, preferred 0.5 to 25 wt.-% graphite or acetylene black, carbon black, graphite or a mixture of these components and 0.5 to 30 wt.-% binder, in particular 5 to 25 wt.-% binder, wherein the composition sum up to 100 wt.-%.

A typical anode composition may comprise 10 wt.% carbon black, 15 wt.-% graphite and 15 wt.-% polyacrylic acid binder (PAA) and sum up to 100 wt.-% with silicon carbon composite particles.

Preferred binders comprise polyacrylic acid (PAA), polyvinyl alcohol (PVA), polyacrylonitrile (PAN), styrene butadiene rubber (SBR), carboxyl methylcellulose (CMC), alginate (Alg), gum arabic (GA), guar gum (GG), chitosan, starch, polyimide, olyethyleneimine (PEI), poly(1-pyrenemethyl methacrylate), poly(9,9-dioctylfluorene-co-fluorenone-co-methylbenzoic ester), b-cyclodextrin polymer (b-CDp), PEDOT:PSS, xanthan gum (XG), chitosan-glutaraldehyde (CS-GA), polyvinylidene fluoride (PVDF) or mixtures thereof.

A further object of the invention is a battery, in particular a secondary battery, more preferred for use in a lithium ion battery (LIB) comprising at least one anode, in particular an anode comprising silicon carbon composite particles of the invention, preferred amorphous silicon carbon composite particles comprising atomically distributed carbon in amorphous silicon. In addition, it is preferred that the battery comprises at least two or more than two secondary cells, in particular up to 1000 secondary cells.

Particular embodiments of the invention are described below without restricting the invention to the specific examples.

**Examples:**

**Experimental:** A tubular reactor made of quartz (length to be heated 500 mm or 1000 mm, diameter 120 mm). The precursor silane and the precursor olefinic hydrocarbon were injected in the tubular reactor through a nozzle. Inert gas was injected in a tubular way around the nozzle of the tubular reactor. Heating elements were arranged outside of the quartz glass reactor and could be controlled along the reactor length. The nozzle was located at the axis of the reactor in the reaction zone in the first reaction section. The reaction was performed at 1 bar$_{abs}$, if not mentioned otherwise.

**Analytical methods:**

**Specific surface area determination**

Specific surface area was determined by nitrogen absorption using Brunauer, Emmett and Teller (BET) method (instrument: TriStar II Plus, Micromeretics). Prior to the measurement samples were dried under vacuum at 150 °C for 20 min.

**Carbon, hydrogen and oxygen content determination:** Total carbon, hydrogen and oxygen content is defined as the concentration averaged over the whole powder volume and is determined using elemental analysis by combustion. For carbon content determination Leco CS744 analyzer was employed. Elemental analysis of oxygen and hydrogen was performed using Leco ONH836 element analyzer. For oxygen and hydrogen content determination, the measurement was carried after and without air contact. For measurements without air contact, samples were filled into capsules in a glove box under protective atmosphere, sealed and discharged from the glove box in transport containers. These transport containers were placed on an attachment, which is flushed with a gas, placed into the analyzer, passed into the incinerator and the measurement was subsequently performed.

**X-ray photospectroscopy (XPS):** Carbon, oxygen and silicon contents are determined by x-ray photoelectron spectroscopy (XPS) using ESCALAB 250xi ThermoFisher Scientific spectrometer equipped with a monochromatic Al K$\alpha$ source as a function of the distance from the surface using a depth profiling method revealing subsurface information. The powders were placed on the XPS sample holder and XPS spectra were collected first from the sample surface. The binding energy is referenced to C1s at 284.6 eV. A sequence of Argon ion gun etching and spectrum acquisition is repeated until profiling has proceeded to the required depth.

**X-ray diffraction (XRD):** The phase composition and structure parameters were determined by Rietveld refinement of x-ray diffraction data collected in the 2theta range of 15 - 110° with a step of 0.05° using Philips X'Pert Pro diffractometer (Cu K$\alpha$ radiation) operated at 40 kV and 40 mA.

**Transmission electron microscopy (TEM):** Structure and powder morphology study were performed using transmission electron microscopy (TEM). The used instruments include a FEI Tecnai F20 operated at 200 kV and a Cs corrected JEOL JEM-2200FS TEM/STEM using an acceleration voltage of 200 kV. The nanoparticles were dispersed in ethanol and deposited on holey carbon TEM sample grids.

**Differential scanning calorimetry (DSC):** To determine the thermal properties of the powders as well as characteristic temperatures of the phase transformations occurring on heat treatment of the samples, DCS measurements were performed using Netzsch STA 449 F1 Jupiter TG/DSC. The samples were studied in the temperature range between 30 and 1100 °C with a heating rate of 10 K/min.

**Solid state NMR:** For NMR measurements a spectrometer operating at frequencies of 400 MHz (H1) was used (Bruker Avance III HD) and fitted with Bruker CP/ MAS probe. Samples were placed into (ZrO$_2$ rotors (4 mm diameter) and spun at 5 kHz (Si29)/9 kHz (C$^{13}$). Field-induction decays (FIDs) were acquired with a relaxation delay of 5 s (C$^{13}$ and Si$^{29}$), spectral width of 32 kHz (Si$^{29}$)/29.8 kHz (C$^{13}$), and Fourier transformed with 100 Hz(Si$^{29}$)/50 Hz(C$^{13}$) line broadening.

**Examples:**

In a tubular reactor made of quartz (length to be heated outside of reactor 500 mm or 1000 mm, diameter 120 mm) precursor silane and the precursor olefinic hydrocarbon were injected through a nozzle located at the axis of the reactor (see table 1). Inert gas was injected in a tubular way around the nozzle of the tubular reactor. In a hot wall reactor, silane is injected into the reactor to obtain pure Si powders, whereas for the synthesis of silicon carbon composite particles as a powder a mixture of monosilane and ethylen as carbon precursor are used. The choice of appropriate gas-phase reaction conditions is guided by envisaged structure and microstructure design aimed at improving material performance in the LIB anode applications (s. table 1).

Table 1: Synthesis conditions for silicon carbon composite particles and pure silicon particles.

| Example | Reactor-temp. (°C) | Silane concentration (Vol.-%) | Ethylene concentration (Vol.-%) | Residence time (s) | Ethylene/ silane ratio | Carbon content (%) |
|---|---|---|---|---|---|---|
| Si/C 1 | 690 | 30 | 4 | 1 | 0.13 | 4.7 |
| Si/C 2 | 690 | 30 | 4 | 5 | 0.13 | 6.3 |
| Si/C 3 | 665 | 20 | 2 | 3 | 0.10 | 4.9 |
| Si/C 4 | 690 | 10 | 4 | 1 | 0.4 | 8.6 |
| Si/C 14 | 640 | 30 | 4 | 5 | 0.13 | 6.3 |
| Si/C 15 | 665 | 20 | 2 | 3 | 0.10 | 4.5 |
| Si/C 17 | 640 | 10 | 4 | 5 | 0.4 | 14.2 |
| Si/C 22 | 640 | 30 | 2 | 5 | 0.06 | 3.7 |
| Si/C 31 | 640 | 20 | 4 | 5 | 0.2 | 9.3 |
| Si-am | 640 | 10 | 0 | 5 | 0 | * |
| Si-cr | 850 | 10 | 0 | 5 | 0 | * |

Table 2: Composition of silicon carbon composite particles and pure silicon particles.

| Examples | Amorphous phase fraction (wt.-%) | Carbon content (wt.-%), | Oxygen content - no air contact (wt.-%) | Hydrogen content - no air contact (wt.-%) | Specific surface area (m$^2$/g) |
|---|---|---|---|---|---|
| Si/C 1 | 98.5 | 4.7 | * | * | * |
| Si/C 2 | 100 | 5.8 | 0.43 | 0.42 | * |
| Si/C 3 | 100 | 4.9 | 0.39 | 0.41 | * |
| Si/C 4 | 100 | 8.6 | * | * | * |
| Si/C 14 | 100 | 6.3 | 0.29 | 0.52 | * |
| Si/C 15 | 100 | 4.5 | 0.29 | 0.32 | * |
| Si/C 17 | 100 | 14.2 | * | * | 8.4 |
| Si/C 22 | 100 | 3.5 | 0.11 | 0.22 | 5.6 |
| Si/C 31 | 100 | 9.3 | * | * | * |
| Si-am | 100 | | 0.15* | 0.045 | 6.4 |
| Si-cr | 0** | | * | * | * |
| * not determined, ** Crystalline phase fraction 100 wt.-% | | | | | |

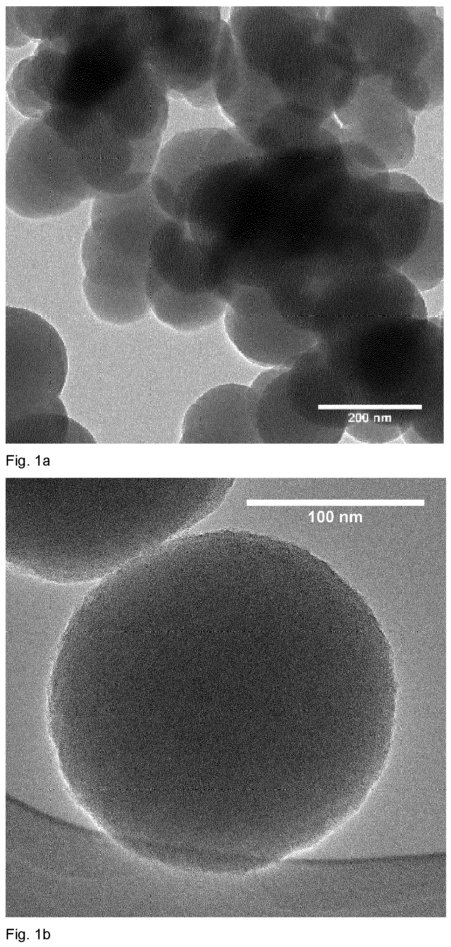

A lower reaction temperature (around or below 700 °C) favours the formation of the amorphous phase. Increasing temperature at and above 700 °C results in an increase of the crystalline Si fraction. At 850 °C, fully crystalline Si is obtained at otherwise identical reaction conditions (Si-cr). Figures 1a and 1b show transmission electron microscopy (TEM) images of the silicon carbon composite particles illustrating that nanoparticles produced at 640 °C and 690 °C, respectively, are amorphous and form agglomerates with no evident sintering between the particles.

The collected silicon carbon particles were analysed by XRD, the silicon, carbon, hydrogen and oxygen contents were detected. Further, XRPD confirmed that the particles were produced as 100 % amorphous particles at reaction temperatures of and below 690 °C. The results are discussed below.

The following figures show in detail the chemical and physical properties of the silicon carbon particles as well as their electrical properties as material in anodes.

Fig. 1a: Amorphous silicon carbon composite particles **(Si/C 22)** produced at 640 °C via gas-phase reaction in the hot-wall reactor.

Fig. 1b: Amorphous silicon carbon composite particles (Si/C 2) produced at 690 °C via gas-phase reaction in the hot-wall reactor.

Fig. 2a: $^{13}$C-CP/MAS spectrum 9.091 pp/cm, 914.7 Hz/cm. No aromatic bonding is observed, the broad signal is purely due to the instrument background.

Fig. 2b: $^{29}$Si-CP/MAS spectrum 9.091 ppm/cm, 727.7 Hz/cm.

Fig. 3a: Potential versus capacity in the first cycle measured at a rate of 0.2 C using the cutoff potentials of 0.01 - 2.5 V vs. Li/Li$^+$ for pure crystalline Si (from Alfa Aesar, SSA about 28 m$^2$/g),

Fig. 3b: Potential versus capacity in the first cycle measured at a rate of 0.2 C using the cutoff potentials of 0.01 - 2.5 V vs. Li/Li$^+$ for amorphous Si produced at 640 °C (Si-am) in a gas-phase reactor,

Fig. 3c: Potential versus capacity in the first cycle measured at a rate of 0.2 C using the cutoff potentials of 0.01 - 2.5 V vs. Li/Li$^+$ for amorphous silicon carbon composite particles (Si/C 22) produced at 640 °C in a gas-phase reactor,

Fig. 3d: Differential capacity curves dQ/dV obtained during delithiation at a rate of 0.2 C using the cutoff potentials of 0.01 - 2.5 V vs. Li/Li+ for pure crystalline Si (from Alfa Aesar, SSA about 28 m$^2$/g),

Fig. 3e: Differential capacity curves dQ/dV obtained during delithiation at a rate of 0.2 C using the cutoff potentials of 0.01 - 2.5 V vs. Li/Li+ for amorphous Si produced at 640 °C (Si-am) in a gas-phase reactor,

Fig. 3f: Differential capacity curves dQ/dV obtained during delithiation at a rate of 0.2 C using the cutoff potentials of 0.01 - 2.5 V vs. Li/Li+ for amorphous silicon carbon composite particles (Si/C 22) produced at 640 °C in a gas-phase reactor.

Fig. 3g: Differential capacity curves dQ/dV obtained during delithiation at the first and second cycle at a rate of 0.2 C using the cutoff potentials of 0.005 - 1 V vs. Li/Li+ for amorphous silicon carbon composite particles (Si/C 15) produced at 665 °C in a gas-phase reactor.

Fig. 4a: X-ray diffraction patterns of silicon and amorphous silicon carbon composite particles with different carbon content synthesized at 640 °C with a residence time of 5 s.

Fig. 4b: X-ray diffraction patterns of pure amorphous silicon (Si-am) and amorphous silicon carbon composite powders (Si/C 14: 6.3 wt.-% C, Si/C 17: 14.2 wt.-%) with different carbon contents synthesized at 640 °C with a residence time of 5 s and subsequently annealed at 690 °C for 1 h.

Fig. 4c: XPS carbon concentration depth profiles recorded from pure amorphous silicon (Si-am) and amorphous silicon carbon composite particles with different carbon content.

Fig. 4d: DSC signals collected from amorphous silicon (Si-am) and amorphous silicon carbon composite powders comprising 3.5 wt.-% carbon (Si/C 22), 6.3 wt.-% carbon (Si/C 14) and 14.2 wt.-% carbon (Si/C 17).

Fig. 5: The ratio of the area of the peak in the differential capacity corresponding to the formation of the crystalline c-Li$_{15}$Si$_4$, A[c-Li$_{15}$Si$_4$], to the area of the differential capacity (dQ/dV) in the range between 0.38 and 0.8 V, A[c-Li$_{15}$Si$_4$ + a-Si"], for pure crystalline Si (from Alfa Aesar), amorphous silicon (Si-am) and amorphous silicon carbon composite particles.

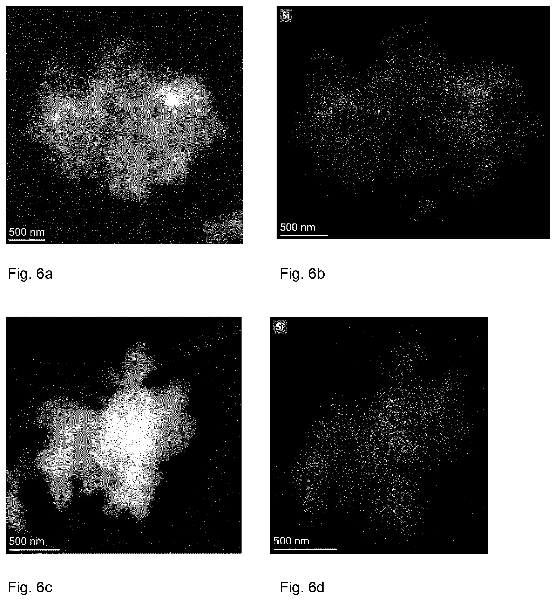

Fig. 6a to d: Transmission electron microscopy (STEM) images and energy dispersive spectra (EDS) of silicon obtained from (a) agglomerated amorphous silicon nanoparticles after 270 full (de)lithiation cycles and (b) agglomerated amorphous silicon carbon composite particles after 310 full (de)lithiation cycles using the cutoff potentials of 0.05 -1 V vs. Li/Li+. The nanoparticles are scrapped from electrodes in the delithiated state. The electrodes contain 60 wt.-% Si or amorphous silicon carbon composite particles, respectively, 15 wt.% carbon black, 10 wt.-% graphite and 15 wt.-% polyacrylic acid binder (PAA). Electrodes are assembled in a coin cell with a pure lithium counter electrode. As electrolyte solution, a mixture of 1 M LiPF$_6$ in ethylene carbonate:ethyl methyl carbonate (3:7) with 2 wt.-% vinylene carbonate and 10 wt.-% fluoroethylene carbonate (FEC) is used. First cycle delithiation capacity of the anodes is about 2900 mAh/g with the first cycle Coulombic efficiency of about 90 %; a mass loading is 1.6 - 1.7 $mg_{anode}/cm^{-2}$.

Fig. 7: Coulombic efficiency vs number of cycles and specific capacity vs number of cycles of amorphous silicon carbon composites particles (amorphous Si/C, 100% amorphous) and crystalline silicon (100 % crystalline). Delithiation capacity (full symbols) and Coulombic efficiency (open symbols) of the fully crystalline silicon (circle symbols) and amorphous silicon carbon composite particles (square symbols).

The chemical and physical properties of the silicon carbon particles as well as their electrochemical properties as material in anodes of the figures 1 to 7 are described below.

The silicon carbon particles were analysed by Rietveld analysis of XRPD, the silicon, carbon, hydrogen and oxygen contents were determined by elemental analysis (Table 2). XRPD confirmed that the particles were produced as amorphous particles, with the amount of the amorphous phase from 99 wt.-% to 100 wt.-%.

Fig. 2a and 2b show solid state NMR spectra obtained from silicon carbon composite particles. No aromatic bonding is observed by $^{13}$C-CP/MAS spectrum 9.091 pp/cm, 914.7 Hz/cm (Fig. 2a) and by $^{29}$Si-CP/MAS spectrum 9.091 ppm/cm, 727.7 Hz/cm (Fig. 2b); the broad signal in the $^{13}$C-CP/MAS spectrum is purely due to the instrument background. $^{29}$Si-CP/MAS (CP: cross polarisation) possesses a very broad signal over circa 130 ppm that can be attributed according to literature (Lit: H. Brequel et al., J. of. Material Synthesis and Processing, 8, 5/6, 2000, 369-375) to the following fragments as proposed in table 3.

**Table 3: $^{29}$Si-CP/MAS signals and their correlation**

| Chem. Shift $^{29}$Si [ppm] | Correlation | SiC<br>+: (attributed to fragment)<br>(+): may be attributed to fragment |
|---|---|---|
| - 20 | $SiC_4$ | + |
| - 80 | $SiSi_4$ | (+) |

With $^{29}$Si *(High performance decoupling)* the observed signal is also broad but less intensive and shifted to a higher field (neg. chem. Shift). In $^{13}$C-NMR spectra (CP/MAS, CP: cross polarisation) the signal occurs at + 14 ppm with a Gaussian profile verifying pure aliphatic carbon signals. The broad signals are also typical for amorphous systems. Therefore, the $^{29}$Si-NMR and $^{13}$C-NMR spectra both prove that the amorphous silicon carbon composite particles are free from crystalline phases and free from polymeric SiC. Crystalline SiC possesses three very sharp signals at -16 ppm, -20 ppm and 27 ppm in $^{29}$Si-NMR spectra as well as in $^{13}$C-NMR spectra a set of three sharp signals at 27 ppm, 20 ppm and 15 ppm.

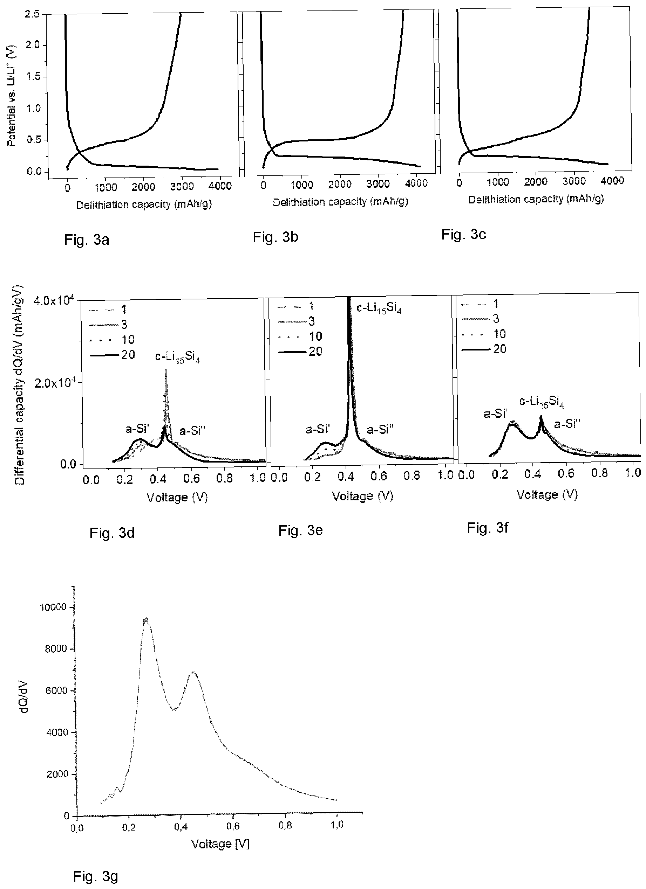

Fig. 3a - 3g: The potential curves were measured on electrodes containing 60 wt.-% Si or amorphous silicon carbon composite particles, respectively, 20 wt.% acetylene black and 20 wt.-% polyimide binder (PI); a mass loading is 1.7 - 1.9 $mg_{anode}/cm^{-2}$. Electrodes are assembled in a coin cell with a pure lithium counter electrode. As electrolyte solution, a mixture of 1 M $LiPF_6$ in ethylene carbonate : ethyl methyl carbonate (3:7) with 3 wt.-% vinylene carbonate is used. The numbers 1, 3, 10 and 20 correspond to the 1st, 3rd, 10th and 20th cycle. a-Si' and a-Si" mark dQ/dV peaks due to lithiated amorphous phases of various composition; c-$Li_{15}Si_4$ mark the position of the dQ/dV peak due to the crystalline c-$Li_{15}Si_4$ phase.

The electrochemical feature of the c-$Li_{15}Si_4$ formation is a characteristic voltage plateau near 0.42 V in the voltage versus capacity curves or a corresponding peak in the differential capacity curves dQ/dV at about 0.42 V during delithiation **(Fig. 3a, 3b, 3d, 3e)**. Both features are indicative of the first-order phase transformation and consequently large volume changes during the transformation and result in lower stability of the silicon-based particles.

Both crystalline and amorphous silicon show this plateau/peak at around 0.42 V indicating the formation of c-$Li_{15}Si_4$ **(Fig. 3a, 3b, 3d, 3e).**

In electrodes containing the silicon carbon composite particles (synonym to amorphous silicon carbon composite particles), the formation of c-$Li_{15}Si_4$ is effectively suppressed, as confirmed by the absence of the characteristic voltage plateau in the voltage versus capacity curves and absent or only a weak peak in the differential capacity dQ/dV curves around 0.42 V **(Fig. 3c, 3f, 3g)**. On the contrary, a distinct peak in the differential capacity curves is observed near 0.42 V in the amorphous Si **(Si-am)** with the peak area being about four times that of amorphous silicon carbon composite particles **(Fig. 3e)**; the peak area corresponds to the c-$Li_{15}Si_4$ amount formed during cycling.

The ratio of the area of the peak in the differential capacity corresponding to the formation of the crystalline c-$Li_{15}Si_4$, A[c-$Li_{15}Si_4$], to the area of the differential capacity (dQ/dV) in the range between 0.38 and 0.8 V, A[c-$Li_{15}Si_4$ +

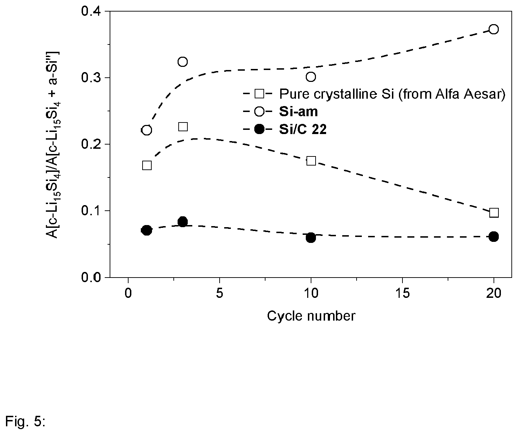

a-Si"], for pure crystalline Si (from Alfa Aesar), amorphous silicon **(Si-am)** and amorphous silicon carbon composite particles is shown in **Fig. 5** and Table 4 in dependence on cycle number. The ratio $A[c-Li_{15}Si_4]/A[c-Li_{15}Si_4 + a-Si"]$ is below 0.1 for the amorphous silicon carbon composite particles and remains essentially unchanged during cycling, whereas this ratio is between 0.1 and 0.37 in pure crystalline Si (from Alfa Aesar) and amorphous Si **(Si-am)**. The ratio $A[c-Li_{15}Si_4]/A[c-Li_{15}Si_4 + a-Si"]$ for amorphous silicon carbon particles produced at 665 °C **(Si/C 15)** is zero, i.e. no formation of the crystalline $c-Li_{15}Si_4$ phase is observed **(Fig. 3g)**.

Table 4: Differential capacity (dQ/dV) as ratio $A[c-Li_{15}Si_4]/A[c-Li_{15}Si_4 + a-Si"]$

| Cycle number | Ratio $A[c-Li_{15}Si_4]/A[c-Li_{15}Si_4 + a-Si"]$ | | | |
| --- | --- | --- | --- | --- |
| | Pure crystalline Si (from Alfa Aesar)* | **Si-am**** | **Si/C 22** | **Si/C 15** |
| 1 | 0.17 | 0.22 | 0.07 | 0 |
| 3 | 0.23 | 0.32 | 0.08 | 0 |
| 10 | 0.18 | 0.30 | 0.06 | Not measured |
| 20 | 0.10 | 0.37 | 0.06 | Not measured |
| * 100% crystalline, ** 100% amorphous | | | | |

The first cycle Coulombic efficiency (CE) is retained at a high level of 89.2 % in the amorphous silicon carbon composite powders; for comparison, the first cycle CE of **Si-am** is 90.2 % and that of pure crystalline Si (from Alfa Aesar) is 77.2 % (the corresponding lithiation/delithiation curves are shown in **Fig. 3**).
Remarkably, the suppression of the $c-Li_{15}Si_4$ phase formation is observed in silicon carbon composite particles at particle sizes around 200 nm and without the addition of FEC (**Fig. 3c** and **3f**). These powders of silicon carbon composite particles have a low specific surface area (SSA) of about 6 $m^2/g$; a small specific surface (SSA) of electrode materials is a promising strategy for implementation in LIB. The addition of carbon in the silicon carbon particles of the invention disturbs the local atomic environment in the amorphous phase and thus supresses the transformation to the crystalline $c-Li_{15}Si_4$ modification.

Thus, the design of silicon carbon composite particles represents the new concept for suppressing the $c-Li_{15}Si_4$ formation.

The reaction between silane and ethylene at 640 ° for 5 s leads to fully (100%) amorphous silicon carbon composite particles with a characteristic amorphous halo in the x-ray diffraction patterns independent of the silane and ethylene concentration in the gas mixture **(Fig. 4a)**. Specifically, the intensity of the halo is decreased and its position shifts to higher diffraction angles with increasing carbon concentration indicating the formation of the silicon and carbon comprising amorphous phase.

To study the distribution of carbon within the silicon carbon composite particles (Si/C nanoparticles), XPS spectra of carbon were collected from the amorphous Si **(Si-am)** and amorphous silicon carbon composite particles and depth profiles were measured using sputtering. Amorphous Si **(Si-am)** shows a low but constant background carbon concentration, which is commonly observed for samples that have been handled under environmental conditions. In contrast, a clear carbon concentration gradient is observed in the silicon carbon composite particles. The higher the carbon content in the silicon carbon composite particles determined by elemental analysis, the steeper is the depth-dependent carbon concentration gradient. The structure of the silicon carbon composite particles can thus be described as C-lean in the particle center and C-rich closer to the particle surface. This particular Si/C structure in silicon carbon composite particles of the invention is distinctly different from the conventional Si +C composites, where Si is coated by/embedded in a carbon layer.

DSC curves of silicon and silicon carbon composite powders show several distinct features **(Fig. 4d)**. The feature around 400 °C to 450 °C can be attributed to hydrogen desorption. An exothermic peak at 680 °C appears most prominent in samples without carbon or with a lower content of carbon. This peak indicates the crystallization of the amorphous silicon, as confirmed by x-ray diffraction analysis of the materials annealed at 690 °C for 1 h **(Fig. 4b)**. Remarkably, the silicon carbon composite particles show a broader and less intense exothermic silicon crystallization signal compared to the amorphous Si **(Fig. 4d)**. In addition, to amorphous Si, the silicon carbon composite particles exhibit an additional exothermic peak between 880 and 920 °C which can be attributed to the in-situ formation of the silicon carbide. The Rietveld analysis of the x-ray data shown in **Fig. 4b** reveals that the pure amorphous Si is completely crystallized after the annealing at 690 °C for 1 h. The amount of the crystalline phase in the silicon carbon composite powders after annealing is significantly lower than that in Si and decreases from 40 wt.-% to 20 wt.-% with increasing carbon concentration from 6.3 to 14.2 wt.-%, respectively. From the DSC measurements it can be concluded that the carbon is advantageous in suppressing the crystallization of the amorphous silicon-based materials, which is of particular importance for implementation of silicon carbon composite particles as anode material.

The presence of carbon in the amorphous silicon carbon composite particles modifies the dealloying reaction and has a stabilization effect against silicon particle degradation, as qualitatively shown by scanning TEM (STEM) analysis **(Fig. 6a to 6d):** annular dark-field (ADF) scanning transmission electron microscopy images and energy dispersive spectra (EDS) of the amorphous silicon carbon composite particles show a lower degree of porosity compared to the pure amorphous Si after 310 and 270 full (de)lithiation cycles with the cutoff potentials of 0.005 - 1 V vs. Li/Li+, respectively (electrodes were cycled to a similar degree of degradation in terms of specific capacity values). This example shows that in the amorphous silicon carbon composite particles the degree of degradation via dealloying reaction can be reduced and thus a better control or attenuation of the evolution of the surface area in the amorphous silicon carbon composite particle containing materials can be achieved.

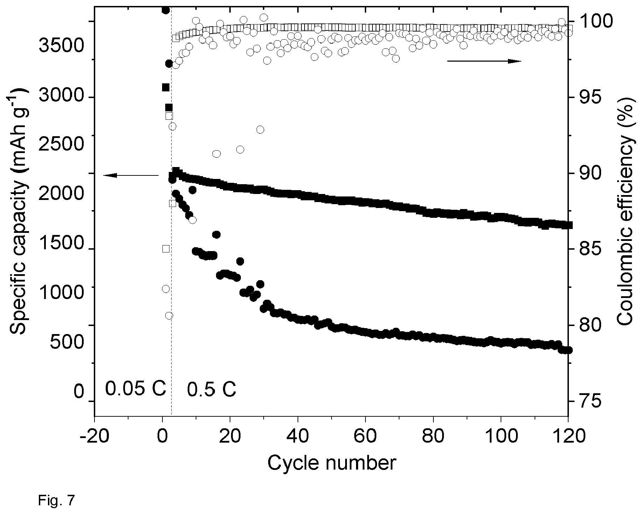

The electrochemical capacity and the Coulombic efficiency of the amorphous silicon carbon composite particles were compared to those of the crystalline Si materials **(Si-cr)** (Figure 7). The preparation of the electrodes was as follows: The electrochemical performance was evaluated in half cells using lithium metal as counter electrode. Silicon or silicon carbon composite particles were mixed with carbon (TIMCAL, Carbon black C45) and binder (poly acrylic acid) in a ratio of 80:5:15 weight percent. All ingredients were mixed together with an ethanol/water mixture for about 7 minutes in a centrifugal mixer to get a homogenous slurry. The slurry was the then doctor-bladed on copper sheets and dried at 60 °C for 16 h. The sheets were cut into round pieces with a diameter of 13 mm. The mass loading was in the range of 1 mg/cm$^2$. The electrodes were mounted in a glovebox in Swagelok T-cells. Lithium foil was used as the counter and reference electrode. The electrolyte was a mixture of 1 M LiPF6, ethylene carbonate (EC) and dimethyl carbonate (DMC) and fluoroethylene carbonate (FEC). Glass fiber material was used as a separator. All electrochemical measurements were performed at 25°C and with a specific current corresponding to 0.05 C, 0.1 C and 0.5 C using a 4000 Battery Tester (Maccor).

The initial capacity is around 3500 mAh/g for pure crystalline silicon and about 3070 mAh/g in case of the amorphous silicon carbon composite particles. In both materials the capacity drops to about 2200 mAh/g after the second cycle. However, the Coulombic efficiency of amorphous silicon carbon composite particles is high in contrast to the pure crystalline silicon and reaches 85 and 92 % for the first and second formation cycle, respectively, and levels at > 99.5 % in the subsequent cycles. We attribute the high Coulomb efficiency to reduced formation of a solid electrolyte interphase because of the carbon content, especially at the particle surface. The high initial capacity is due to the high overall content of silicon and indicates that the silicon is electrically well connected. The amorphous silicon carbon composite particles show a good performance during the first 120 cycles together with high specific capacity. After 120 cycles the capacity is at 1700 mA/g, whereas that for pure crystalline silicon is around 415 mAh/g.

Further modification of the synthesis of the silicon carbon composite particles at lower temperature in a well-defined reaction zone within a tubular inert gas stream, that surrounds the precursor silane and precursor olefinic hydrocarbon at a lower temperature of about 490 °C to 640 °C within a short time frame of 500 milliseconds to 20 seconds, preferred to 10 seconds results in silicon carbon particles of very uniform, spherical particles of a particle size of less than 250 nm, preferred 90 to 230 nm. The tubular inert gas stream is in particular a laminar inert gas stream. Due to the very specific reaction conditions, forming a reaction zone within the tubular inert gas stream of a temperature from 400 °C to 670 °C, preferred from 430 °C to 500 °C where the gaseous stream comprising precursor silane and precursor olefinic hydrocarbon is injected into the reaction zone 100 % amorphous silicon carbon particles comprising a carbon content decreasing from the area beneath the surface to the area of the centre of the particles can be obtained, which possess a high capacity of suppression of crystalline $Li_{15}Si_4$ phase formation.

**Claims**

1. Silicon carbon composite particles, **characterized in that** the particles comprising the components

   85 to 99.63 wt.-% silicon content,
   0.3 to 15 wt.-% carbon content, and
   at least 0.04 wt.-% hydrogen content and optionally 0 to 1 wt.-% oxygen content,
   wherein the components sum up to 100 wt.-%, and wherein the carbon content in the area beneath the surface of the particles starting with the surface and reaching up to at least 30 nm from the surface in direction to the centre of the particles is at least
   3 wt.-% higher than in the area of the centre of the particles, wherein the area of the centre is the remaining part of the particles and is directly joined to the area beneath the surface.

2. Silicon carbon composite particles according to claim 1, **characterized in that** the particles are free from a chlorine content, in particular the chlorine content is below 0.7 ppm-wt.

3. Silicon carbon composite particles according to claim 1 or 2, **characterized in that** the average particles size of the primary particles is less than 300 nm, in particularly less than 250 nm.

4. Particles according to any of claims 1 to 3, **characterized in that** the particles have a content of amorphous silicon comprising hydrogen, SiH-species and/or
   (poly-[SiH$_2$]-).

5. Particles according to any of claims 1 to 4, **characterized in that** the silicon content of the particles is at least 0.5 wt.-% to 30 wt.-%, particularly from 0.5 wt.-% to 20 wt.-%, higher in the area of the centre of the particles than in the area beneath the surface of the particles, and wherein the area of the centre is joined to the area beneath the surface, wherein the area beneath the surface of the particles starts with the surface and reaches up to 30 nm from the surface in direction to the centre of the particles.

6. Particles according to claim 5, **characterized in that** the silicon content of the particles is at least 2.0 to 15 wt.-% higher in the area of the centre of the particles than in the area beneath the surface of the particles, and, wherein the area of the centre is joined to the area beneath the surface, wherein the area beneath the surface of the particles starts with the surface and reaches up to 30 nm from the surface in direction to the centre of the particles.

7. Particles according to any of claims 1 to 6, **characterized in that** the carbon content of the particles is at least 3 wt.-% to 30 wt.-%, higher in the area beneath the surface of the particles than in the area of the centre of the particles, and wherein the area of the centre is joined to the area beneath the surface, wherein the area beneath the surface of the particles starts with the surface and reaches up to 30 nm from the surface in direction to the centre of the particles.

8. Particles according to any of claims 1 to 7, **characterized in that** the carbon content of the particles is from 2 wt.-% to 15 wt.-%.

9. Particles according to any of claims 1 to 8, **characterized in that** the particles have a content of aliphatic carbon-hydrogen compounds.

10. Particles according to any of claims 1 to 9, **characterized in that** the particles possess differential capacity (dQ/dV) versus voltage curves with a peak corresponding to the crystalline Li$_{15}$Si$_4$ (c-Li$_{15}$Si$_4$) formation, whereby the ratio of the area of this peak to the area of the differential capacity (dQ/dV) in the range between 0.38 and 0.8 V is in the range of 0 to 0.1 during at least the first cycle, and in particular until at least the twentieth cycle, more preferred during at least 100 cycles.

11. Process for the production of silicon carbon composite particles, in particular to any of claims 1 to 10, comprising the steps of

    (i) reacting

        a) a gaseous stream comprising precursor silane of at least one precursor silane comprising monosilane, disilane, trisilane, tetrasilane, pentasilane, hexasilane, heptasilane, octasilane, iso-tetrasilane, iso-pentasilane, neo-pentasilane, cyclopentasilane, cyclohexasilane and/or a fully hydrogenated organosilane comprising 1 to 8 silicon atoms and 1 to 10 carbon atoms or a mixture of at least two of the aforementioned silanes, and
        b) a gaseous stream comprising precursor hydrocarbon selected from olefinic hydrocarbons, alkines and a mixture of at least two of the aforementioned hydrocarbons,

    (ii) within a tubular reactor at a reaction temperature of 400 to 700 °C, preferred at 490 °C to 645 °C,
    (iii) wherein the reaction mainly takes place within a heated tubular inert gas stream during a time frame of 500 milliseconds to 20 seconds, and optionally
    (iv) the reaction mixture is quenched with an inert gas possessing a lower temperature than the reaction mixture, and optionally collecting the silicon carbon composite particles.

12. Process according to claim 11, wherein in (b) the precursor hydrocarbon is an olefinic hydrocarbon of at least one precursor olefinic hydrocarbon selected form alkenes and cycloalkenes comprising 1 to 10 carbon atoms or a mixture of at least two of the aforementioned olefinic hydrocarbons.

**13.** Process according to claim 11 or 12, wherein in (iii) the reaction takes place within a reaction zone that is located within the heated tubular inert gas stream during a time frame of 500 milliseconds to 20 seconds, and optionally wherein the heated tubular inert gas stream possesses an outer circumference and an inner circumference, wherein the inner circumference is joined with the reaction zone which is within the heated tubular inert gas stream, wherein the radial distance from the inner circumference to the outer circumference of the tubular inert gas stream has a ratio of 2 : 1 to 1 : 10 in relation to the radius of the reaction zone within the tubular inert gas stream.

**14.** Process according to one of claims 11 to 13, wherein in (iii) the reaction takes place within a reaction zone that is located within the heated tubular inert gas stream during a time frame of 500 milliseconds to 20 seconds, and wherein the heated tubular inert gas stream possesses a temperature of about 400 to 520 °C when the precursor silane, the precursor olefinic hydrocarbon or a mixture thereof is injected into the reaction zone of the tubular reactor.

**15.** Process according to one of claims 11 to 14, wherein the inert gas is selected from Argon, Helium, Neon and Nitrogen, in particular the inert gas stream is selected from Argon and/or the inert gas for quenching is selected from Nitrogen and Argon.

**16.** Process according to one of claims 11 to 15, wherein the heated tubular inert gas stream has a volume flow of 1 to 10 Nm$^3$/h.

**17.** Anode, in particular anode for use in a cell in a secondary lithium ion battery (LIB) comprising silicon carbon composite particles according to any of previous claims 1 to 11 or obtainable according to any of claims 12 to 16 and optionally comprising a binder.

**18.** Battery, in particular secondary battery, more preferably for use in a lithium ion battery (LIB) comprising at least one anode according to claim 17.

Fig. 1a

Fig. 1b

240 230 220 210 200 190 180 170 160 150 140 130 120 110 100 90 80 70 60 50 40 30 20 10 0 -10 -20 -30 ppm
Scale: 9.091 ppm/cm, 914.7 Hz/cm

$^{13}$C CP/MAS Spektrum

Fig. 2a

80 60 40 20 0 -20 -40 -60 -80 -100 -120 -140 -160 -180 ppm
Scale: 9.091 ppm/cm, 722.7 Hz/cm

$^{29}$Si CP/MAS Spektrum

Fig. 2b

Fig. 3a            Fig. 3b            Fig. 3c

Fig. 3d            Fig. 3e            Fig. 3f

Fig. 3g

Fig. 4a

Fig. 4b

Fig. 4c

Fig. 4d

Fig. 5:

Fig. 6a

Fig. 6b

Fig. 6c

Fig. 6d

Fig. 7

Europäisches
Patentamt

European
Patent Office

Office européen
des brevets

# EUROPEAN SEARCH REPORT

Application Number

EP 20 19 4092

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/208844 A1 (KEPLER KEITH D [US] ET AL) 20 August 2009 (2009-08-20) * paragraph [0074]; example 3; table 1 * ----- | 1,2,5-10 | INV. H01M4/134 H01M4/1395 H01M4/36 H01M4/38 |
| X A | EP 3 423 403 A1 (EVONIK DEGUSSA GMBH [DE]) 9 January 2019 (2019-01-09) * page 3, line 5 - page 6, line 11; examples 1-6 * ----- | 1-13, 15-18 14 | |
| X A | EP 3 428 999 A1 (EVONIK DEGUSSA GMBH [DE]) 16 January 2019 (2019-01-16) * paragraphs [0032] - [0033]; example 1 * ----- | 1-13, 15-18 14 | |

| TECHNICAL FIELDS SEARCHED (IPC) |
|---|
| H01M |

The present search report has been drawn up for all claims

| Place of search | Date of completion of the search | Examiner |
|---|---|---|
| Munich | 16 February 2021 | Monti, Adriano |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

........................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 20 19 4092

This annex lists the patent family members relating to the patent documents cited in the above-mentioned European search report.
The members are as contained in the European Patent Office EDP file on
The European Patent Office is in no way liable for these particulars which are merely given for the purpose of information.

16-02-2021

| Patent document cited in search report | | Publication date | Patent family member(s) | | Publication date |
|---|---|---|---|---|---|
| US 2009208844 | A1 | 20-08-2009 | CN | 101494286 A | 29-07-2009 |
| | | | US | 2009208844 A1 | 20-08-2009 |
| EP 3423403 | A1 | 09-01-2019 | CN | 108698835 A | 23-10-2018 |
| | | | DE | 102016203324 A1 | 07-09-2017 |
| | | | EP | 3423403 A1 | 09-01-2019 |
| | | | JP | 2019507096 A | 14-03-2019 |
| | | | KR | 20180120170 A | 05-11-2018 |
| | | | US | 2020317529 A1 | 08-10-2020 |
| | | | WO | 2017148911 A1 | 08-09-2017 |
| EP 3428999 | A1 | 16-01-2019 | CN | 109256534 A | 22-01-2019 |
| | | | EP | 3428999 A1 | 16-01-2019 |
| | | | JP | 2019021630 A | 07-02-2019 |
| | | | KR | 20190007397 A | 22-01-2019 |
| | | | TW | 201908239 A | 01-03-2019 |
| | | | US | 2019016601 A1 | 17-01-2019 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **D.S.M. LABONI ; M.N. OBROVAC.** *J. Electrochem. Soc.,* 2016, vol. 163, A255

- **H. BREQUEL et al.** *J. of. Material Synthesis and Processing,* 2000, vol. 8 (5/6), 369-375